# EUROPEAN PATENT APPLICATION

(11) **EP 1 435 333 A1**
(43) Date of publication of application: **07.07.2004**
(21) Application number: 03079156.0
(22) Date of filing: 22.12.2003
(51) Int. Cl.: B65G 1/04, B65G 1/06

(54) **Method and apparatus for the handling and storage of loads**

(30) Priority: 02.01.2003 FI 20030001
(71) Applicant: Awa Advanced Warehouse Automation Oy, 01601 Vantaa (FI)
(72) Inventor: Haimala, Juha, 03400 Vihti (FI); Mantere, Tuomas, 00410 Helsinki (FI); Värttö, Pentti, 04400 Järvenpää (FI)
(74) Representative: Laine, Terho Tapio (FI)

(57) **Abstract**

A method for storing loads (P), especially cylindrical objects such as paper rolls, in a storage (1), where the loads are brought in and stored and from where the loads are taken out by means of a load manipulating device for further processing. At least one load (P) at a time is moved into storage and/or out of storage by means of at least two separate carriage units (10) working in an at least substantially synchronized manner relative to each other, which together move the at least one load.

## Description

### Background of the invention

The present invention relates to a method as defined in the preamble of claim 1 for storing loads, especially cylindrical objects, such as paper rolls, in a storage where the loads are brought in and stored and from where the loads are taken out by means of a load manipulating device for further processing.

The invention also relates to an apparatus as defined in the preamble of claim 6 for storing loads, especially cylindrical objects, such as paper rolls, in a storage where the loads are brought in and stored and from where the loads are taken out by means of a load manipulating device for further processing.

Specification EP 390813 B1 presents a method and an apparatus for handling and storing products, especially cylindrical products, such as paper rolls. In prior-art solutions, the apparatus requires a considerable space reservation and, in the load manipulating device, such as a stacker, auxiliary equipment that leads to complicated operation and increases the costs. Such auxiliary equipment includes e.g. various turning devices. In addition, the apparatus used at present impose extra requirements on the shelving structures, causing considerable costs.

The object of the present invention is to achieve a completely new type of method and apparatus that will reduce the total costs of storage and handling and allow more effective space utilization as compared with prior-art methods and apparatus.

### Brief description of the invention

The method of the invention is mainly characterized in that at least one load at a time is moved into storage and/or out of storage by means of at least two separate carriage units working in an at least substantially synchronized manner relative to each other, which together move the at least one load.

The method of the invention is additionally characterized by what is said in claims 2 - 5.

The apparatus of the invention is characterized in that that it comprises at least two separate carriage units working in an at least substantially synchronized manner relative to each other, which are arranged to move at least one load together when necessary.

The apparatus of the invention is additionally characterized by what is said in claims 7 - 10.

The solution of the invention has numerous significant advantages. By using the solution of the invention, the space required for storage and handling as well as for the load manipulating device is reduced while the effective volume is increased. In addition, the costs caused by the load manipulating device are reduced significantly as compared with prior art. The load manipulating device can be implemented as a simpler mechanism because in the solution of the invention the carriage need not be turned to the opposite side of the shelving when the products are being moved.

In this application, load refers generally to a product to be stored. According to a preferred embodiment, the load is a cylindrical object, such as a paper roll.

### Brief description of the figures

In the following, the invention will be described in detail by the aid of an example with reference to the attached drawing, wherein
Fig. 1 presents a prior-art store in top view,
Fig. 2 presents a cross section of the store in Fig. 1 along line II - II.
Fig. 3 presents a cross section of the store in Fig. 1 along line III - III.
Fig. 4 presents an oblique top view of a prior-art transport carriage with a paper roil.
Fig. 5 presents an oblique top view of a carriage unit according to the invention,
Fig. 6 presents two carriage units according to the invention and a part of a shelving structure,
Fig. 7 presents a solution according to the invention as seen from the direction of shelving corridor.

### Detailed description of the invention

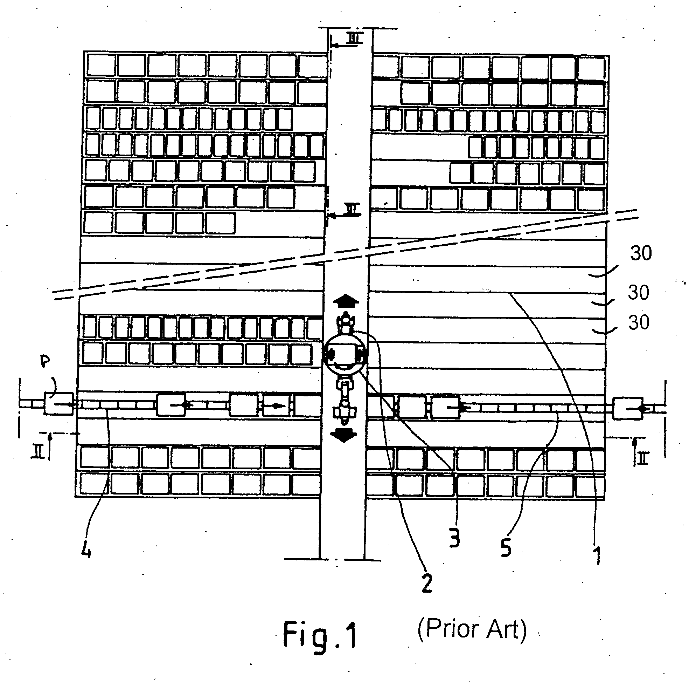

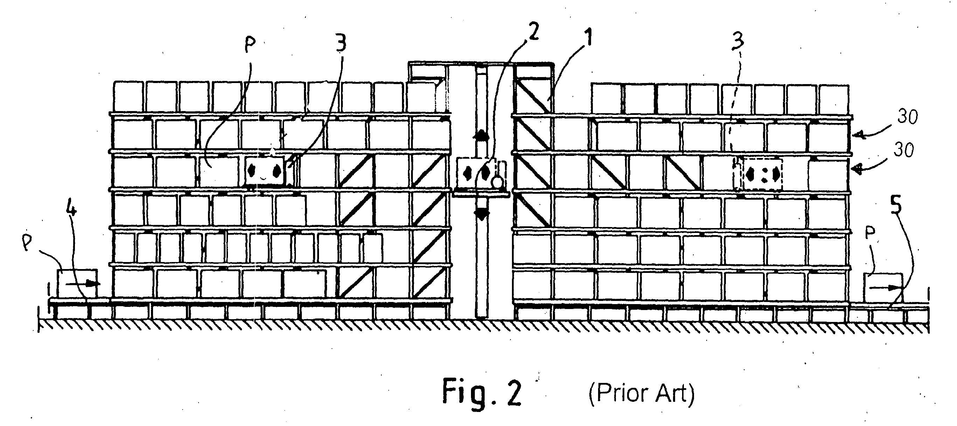

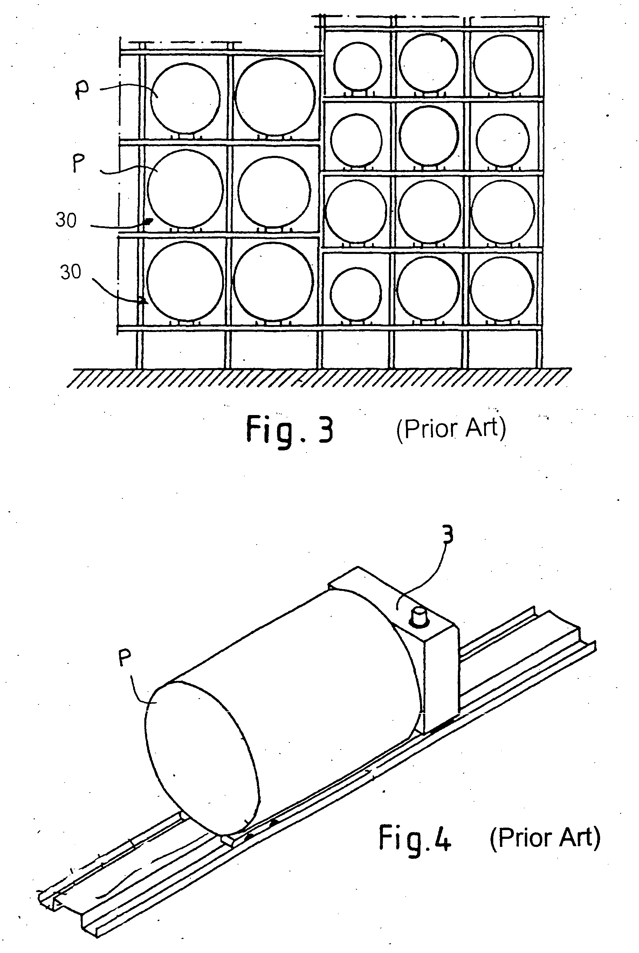

Figures 1, 2, 3 and 4 illustrate a prior-art solution, which is known e.g. from specification EP 390813B1 (FI 97209 B). In these figures, the loads, especially paper rolls P to be stored, are brought to a reception station 4, where the rolls are deposited in succession, forming a line. The rolls P are held in a recumbent position. A load manipulating device, such as a stacker 2 and a transport carriage 3 associated with it, takes a paper roll P from the reception station and places it on the stacker, which further transports the carriage and the paper roll resting thereon to a given location in the store, where the transport carriage 3 starts moving the paper roll into a corridor 30 in the storage shelving. In this manner, the shelving corridors 30 are filled with paper rolls. When a given paper roll is to be fetched from the store, the stacker first locates the right corridor, whereupon the transport carriage 3 fetches the paper roll from the shelving corridor and delivers it to the stacker, which then takes the carriage and the paper roll resting thereon to a delivery station 5, from where the paper roll is taken to a further processing stage. The store in the figures comprises two adjacent shelving blocks, between which the stacker 2 moves. The stacker is provided with a rotary table which can be rotated through 180 DEG about its vertical axis so as to allow the transport carriage resting thereon to be rotated such that it can enter each of the shelving corridors on either side of the stacker while moving forwards, i.e. with the lifting fork or the forward end of the transport carriage 3 first. A more detailed view of the prior-art transport carriage 4 is shown in Fig. 4.

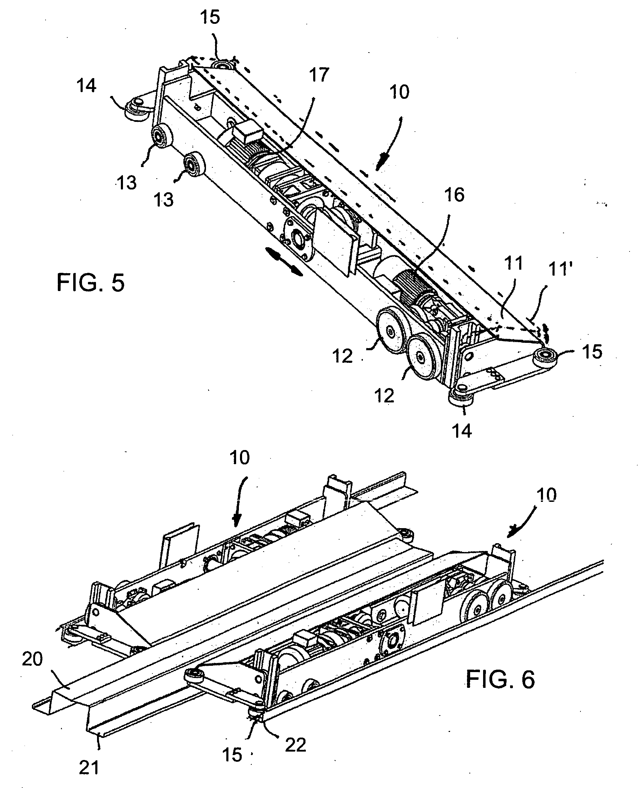

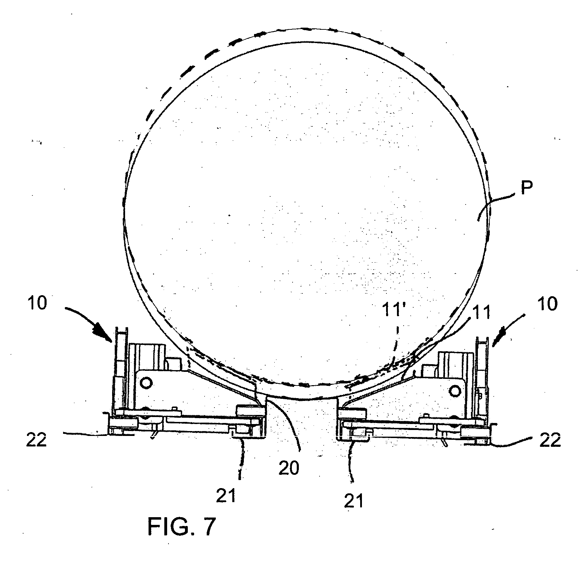

A solution according to the invention is presented in Fig. 5 - 7. In the solution of the invention, transport carriage for conveying the load P consists of at least two separate carriage units 10, which can be moved in synchronism with each other at least when necessary. According to an embodiment, the carriage unit 10 comprises means for moving the carriage unit along a desired track, such as a roller race 21, 22. In the embodiment illustrated in the figure, the means for moving the carriage comprise roller elements 12, 13 and a drive 16 for driving the roller elements. In addition, the carriage unit 10 comprises at least one lifting element 11. Typically, the lifting device is used for lifting the load P from the seat 20 and/or for lowering it onto the seat 20. In Fig. 5, the broken line represents a high position 11' of the lifting element. According to a preferred embodiment, the shape of the lifting element 11 is adapted to the load to be handled. In the embodiments presented in Fig. 5 - 7, the surface of the lifting element 11 facing the load P is an inclined planar surface. According to Fig. 6, those surfaces of the lifting elements 11 of the carriage units 10 working together that meet the load P have been fitted to support a recumbent cylindrical object. In this case, for example, they have been fitted to touch a side surface of the object P in a tangential direction. In the carriage units 10 handling the load, the surfaces that together support the load P have been arranged to support the load from opposite sides of the seat 20. Different carriage units 10 have been arranged to travel on different sides of the seat 20. The height of the carriage unit 10 has been fitted to allow the carriage unit to pass below the stored loads at least when the lifting element 11 is in its low position. According to a preferred embodiment, the carriage unit 10 is able to move under the loads P, at least partially, from both of its main traveling directions. According to another preferred embodiment the carriage unit 10 is able to move totally under the loads P from both of its main traveling directions. According to a preferred embodiment the carriage units 10 are substantially under the load when conveying the load P. This means that no extra space is needed for carriage units 10 in the storage.

The at least two carriage units 10 are mutually synchronized so that together the are able to take the load P to a storage location and lower the load in the storage location and, on the other hand, to fetch the load from the storage location to the load manipulating device, such as a stacker. According to a preferred embodiment, the carriage units 10 are provided with a synchronized drive. In this case, the motional positions of their drives are synchronized relative to each other. The synchronization can be achieved by using e.g. stepping motors. Alternatively, the synchronization may be based e.g. on a determination of the positions of the carriage units 10. When fetching a load P, such as a roll, the carriage units 10 are typically so positioned that the roll will be in the correct position on the carriage units, whereupon the load lifting elements 11 of the carriage units perform a substantially simultaneous lifting movement. After performing the lifting movement, the carriage units 10 return back to the load manipulating device. When leaving the roll in the shelving corridor 30, they are typically positioned with respect to the corridor and/or the rolls present in it by means of sensors and/or radar devices.

The carriage unit 10 typically comprises a frame, elements arranged in the frame for moving the carriage unit, and load lifting elements 11. The frame is typically provided with wheels or corresponding roller elements 12, 13, which have been fitted to tracks, such as rails 21, 22, provided in the shelving. The carriage unit is typically also provided with guide elements, such as roller elements 14, 15 meeting the sides of the track.

The load lifting elements 11 are actuated by the drive 17, e.g. via a linkage. The drive 17 may be e.g. an electric motor. According to another embodiment, the drive 17 may consist of a cylinder-piston unit, a bellows element or some other suitable arrangement. The operating power for the carriage units 10 can be supplied to the carriage units e.g. via a cable. or via rails mounted in ducts. The carriage units may also be battery driven. The battery may be either an electric battery or a pneumatic or hydraulic accumulator.

It is obvious to the person skilled in the art that the invention is not limited to the example described above, but that it may be varied within the scope of the claims presented below.

## Claims

1. A method for storing loads (P), especially cylindrical objects such as paper rolls, in a storage (1), where the loads are brought in and stored and from where the loads are taken out by means of a load manipulating device for further processing, **characterized in that** at least one load (P) at a time is moved into storage and/or out of storage by means of at least two separate carriage units (10) working in an at least substantially synchronized manner relative to each other, which together move the at least one load.

2. Method according to claim 1, **characterized in that** the at least one load (P) is moved from a load manipulating device (2), such as a stacker, by at least two carriage units (10) together to a given storage location.

3. Method according to claim 1 or 2, **characterized in that** the at least one load (P) is moved from the storage location to the load manipulating device (2), such as a stacker, together by at least two carriage units (10).

4. Method according to any one of claims 1 - 3, **characterized in that** the load (P) is lifted and/or lowered from/into the storage location by at least two carriage units (10) working in a mutually synchronized manner.

5. Method according to any one of claims 1 - 4, **characterized in that,** when necessary, the carriage units (10) can be moved without a load (P) from under the at least one load (P) at least when the load is in the storage location.

6. Apparatus for storing loads (P), especially cylindrical objects such as paper rolls, in a storage (1), where the loads are brought in and stored and from where the loads are taken out by means of a load manipulating device for further processing, **characterized in that** the apparatus comprises at least two separate carriage units (10) working in an at least substantially synchronized manner relative to each other, which are arranged to move at least one load (P) together when necessary.

7. Apparatus according to claim 6, **characterized in that** the carriage unit (10) comprises at least one lifting element (11).

8. Apparatus according to claim 6 or 7, **characterized in that** the carriage unit (10) can be moved at least partially under the load (P), at least when the load is resting on a seat (20).

9. Apparatus according to any one of claims 6 - 8, **characterized in that** the carriage units (10) have been arranged to operate in pairs.

10. Apparatus according to any one of claims 6 - 9, **characterized in that** the apparatus comprises means for positioning the carriage units (10) at least when they are retrieving a load (P) from a storage location and/or taking a load into a storage location.
